## Europäisches Patentamt
## European Patent Office
## Office européen des brevets

(19)

(11) Veröffentlichungsnummer: **0 092 636**
**B1**

(12) ## EUROPÄISCHE PATENTSCHRIFT

(45) Veröffentlichungstag der Patentschrift:
**15.10.86**

(51) Int. Cl.⁴: **C 21 C 5/46,** G 01 N 1/12

(21) Anmeldenummer: **83100310.8**

(22) Anmeldetag: **15.01.83**

(54) Verfahren und Vorrichtung zum Handhaben von Mess-, bzw. Probenahme-Sondenrohren beim Metall-, insbesondere beim Stahlerzeugen.

(30) Priorität: **22.04.82 DE 3214898**

(43) Veröffentlichungstag der Anmeldung:
**02.11.83 Patentblatt 83/44**

(45) Bekanntmachung des Hinweises auf die Patenterteilung:
**15.10.86 Patentblatt 86/42**

(84) Benannte Vertragsstaaten:
**AT BE FR GB IT LU NL SE**

(56) Entgegenhaltungen:
**EP-A-0 009 585**
**DE-A-2 521 833**
**DE-A-2 631 060**
**DE-A-2 750 025**
**DE-A-2 807 152**
**DE-C-2 753 161**

(73) Patentinhaber: **MANNESMANN Aktiengesellschaft, Mannesmannufer 2, D-4000 Düsseldorf 1 (DE)**

(72) Erfinder: **Scherff, Helmut, Geldernsche Strasse 305a, D-4133 Neukirchen- Vluyn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren und eine zugehörige Vorrichtung zum Handhaben von Meß- bzw. Probenahme-Sondenrohren beim Metall-, insbesondere beim Stahlerzeugen, bei dem das Sondenrohr horizontal aus einem Sondenmagazin entnommen, vertikal an einer Meßlanze befestigt, in das Metallbad abgesenkt, anschließend angehoben und entsorgt wird.

Derartige Manipulationsverfahren dienen der Temperaturmessung im metallurgischen Prozeß. wie z. B. bei der Stahlerzeugung, und zur Entnahme von Metallproben, die nach Abkühlung im Laboratorium analysiert werden. Bei solchen Verfahren ist die Einsatzbereitschaft von erheblicher Bedeutung, um so schnell wie möglich die gewünschten Meßwerte zu erhalten. Für das Manipulieren der Sondenrohre ist jedoch erforderlich. jedes einzelne Sondenrohr aus dem Sondenmagazin zu entnehmen und in der Lage der Meßlanze an der Meßlanzenspitze zu befestigen. Nach dem Meßvorgang ist außerdem erforderlich, das Sondenrohr entweder ganz zu entfernen oder aber zunächst den Probenahme-Teil abzuschneiden und an eine geeignete Transportvorrichtung zu übergeben, die den Probenahme-Teil dem Laboratorium zuführt.

Jegliche Manipulation bedarf daher eines gewissen Zeitaufwandes, so daß sich Gesamtzeiten von etwa 100 bis 120 Sekunden für eine abgeschlossene Manipulation ergeben. Wie sich in der Praxis gezeigt hat, stellen jedoch 120 Sekunden eine unerwünscht lange Zeitspanne dar, die möglichst verkürzt werden sollte.

Es ist bekannt (DE-A1-26 31 060), die Probenahme-Sondenrohre wie üblich einzeln aus einem Vorratsbehälter zu entnehmen, einem zwar unmittelbar daneben angeordneten, jedoch körperlich getrennten Probeeinbringmechanismus zu übergeben, welcher die auf ihn gelangenden Sondenrohre in den Bereich des am Schmelzofen behindlichen Sondenrohr-Haltestabes schwenkt und die Sondenrohre auf diesen schiebt und außerdem einen Entnahme- und Rückholmechanismus getrennt von dem Sondenrohr-Einbringmechanismus vorzusehen, der so schwenkbar im Bereich der Schmelzofenöffnung angebracht ist, daß die an ihm befindlichen Haltevorrichtungen dann und nur dann in den Bereich der Ofenöffnung geschwenkt werden, wenn ein Probekörper aus dem Bereich des Schmelzofens herausgenommen werden soll. Es versteht sich von selbst, daß durch das mehrmalige übergeben vom Sondenmagazin auf den Manipulator, vom Manipulator auf die Schwenkvorrichtung und von der Schwenkvorrichtung an die Meßlanze und nach dem Ausbringen wiederum von der Meßlanze zurück auf die Schwenkvorrichtung eine erhebliche Zeit in Anspruch genommen werden muß, um die Manipulation durchzuführen.

Bei einem solchen Manipulationsverfahren ist zwar eine gewisse Zeit erforderlich, um die Manipulation der Sondenrohre während eines Zyklus' auszuführen. Davon abgesehen, nimmt die Vorrichtung zur Durchführung des bekannten Verfahrens einen erheblichen Raum in Anspruch, was im Hinblick auf die Raumverhältnisse in den Metallerzeugungsanlagen, z.B. in den Stahlwerken, nachteilig ist.

Zum Stand der Technik gehört die EP-A 0 059 585 Aus dieser Schrift sind ein Verfahren und eine Vorrichtung zum Handhaben von Meß- bzw. Probenahme-Sondenrohren beim Metall-, insbesondere beim Stahlerzeugen, bekannt. Bei dem Verfahren wird die Meßlanze neben dem Vorratsbehälter mit den Sondenrohren verbunden, wobei sich im Bereich seitlich unterhalb der Haltelanze der Konverter oder ein ähnliches metallurgisches Gefäß befindet, so daß die Haltelanze seitlich verfahren werden muß, um in die Meßbahn zu gelangen.

Die Gattung der Vorrichtung zum Handhaben von Meß- bzw. Probenahmen-Sondenrohren beim Metall-, insbesondere beim Stahlerzeugen, ist aus der DE-A-25 21 833 bekannt. Die bekannte Einrichtung arbeitet in der Meßebene, wobei jedoch die Sondenrohre aus zwei Magazinen entnommen werden, die auf einem Gestell in Richtung nach der lotrechten Mittellinie (der Meßbahn) hin schiebbar geführt sind. Das betreffende Magazin wird dabei so in den Raum zwischen zwei Trägern eingefahren, daß ein trichterförmiger Aufsatz mittig zu der Meßlanze unterhalb von dieser liegt. Danach wird die Meßlanze durch Absenken des Meßlanzenschaftes durch den Aufsatz hindurch in die Meßkartusche eingeschoben.

Der Erfindung liegt daher die Aufgabe zugrunde, die Anzahl der Funktionsablauf-Schritte für einen geschlossenen Zyklus beim Manipulieren eines Sondenrohres zu vermindern, um dadurch Zeit zu sparen. d.h. die Manipuliereinrichtung in kürzeren Zeitabständen, also häufiger einzusetzen, um eine höhere Anzahl von Messungen bzw. Probenahmen durchzuführen.

An die verfahrenstechnische Aufgabe schließt sich die vorrichtungstechnische Aufgabe an, die Vorrichtung kompakt zu bauen, um lange Transportwege im Sinne der angestrebten Zeiteinsparung zu kürzen und allerdings auch, um den örtlichen Gegebenheiten gerecht zu werden.

Die verfahrenstechnische Aufgabe wird erfindungsgemäß dadurch gelöst, daß das im Manipulator wie an sich bekannt horizontal liegende Sondenrohr aufgrund nur einer Schwenkbewegung in vertikaler Ebene unmittelbar in die vertikale Meßachse bewegt, dort mit der Meßlanze verbunden, danach aus dem Manipulator hochgehoben und auf der zwischenzeitlich freigemachten Meßbahn in das Metallbad abgesenkt, nach dem Messen bzw. Probenehmen gehoben und in der Meßachse entsorgt wird, wobei zum Freimachen der Meßbahn der Manipulator und eine für die Meßlanze vorgesehene Zentriervorrichtung jeweils gleichzeitig aus der Meßbahn weggeschwenkt werden. Dieses Verfahren führt zu einer erheblichen Zeiteinsparung. Sobald nämlich das Sondenrohr von der Klemmeinrichtung des Manipulators erfaßt ist, bedarf es nur noch der Zeit für das Schwenken des Manipulators von der horizontalen in die vertikale Lage, wobei ein Schwenkwinkel von 90 Grad in Betracht kommt, um danach noch die Meßlanze zur Verbindung mit dem Sondenrohr in den Manipulator einzuführen. Diese beiden Teilzeiten sind äußerst gering, was sich ebenfalls vorteilhaft auf das Zurückschwenken des Manipulators in Ausgangsposition und damit für das Freimachen der Meßbahn, auf der die Meßlanze abgesenkt wird, feststellen läßt. Da das Wegschwenken der Zentriervorrichtung zeitlich mit dem Wegschwenken des Manipulators zusammenfällt, beeinträchtigt die Zentriervorrichtung in keiner Weise die vorgegebene Zeit für den Gesamtzyklus.

Der vorrichtungstechnische Teil der Erfindungsaufgabe wird auf der Grundlage einer Vorrichtung zur Durchführung des Verfahrens mit einem um eine horizontale Schwenkachse schwenkbaren Manipulator und einem Sondenmagazin dadurch gelöst, daß der Manipulator unmittelbar an dem in Betriebsstellung vertikalen Führungsgerüst für den Meßlanzenschlitten gelagert ist und daß die Abstände von der Meßachse zur horizontalen Schwenkachse bzw. von der horizontalen Schwenkachse des Manipulators zur horizontalen Transportachse für die Sondenrohre gleich groß sind. Damit stellt die Bewegungsbahn vorteilhafterweise eine Kreisbahn dar, auf der der Manipulator bewegt wird. Vorteilhaft ist jedoch die kompakte Bauweise, da das Sondenmagazin nicht nur unmittelbar an den Manipulator anschließt, sondern eine besondere Schwenkvorrichtung gänzlich in Wegfall kommt. Ein dergestalt schwenkbarer Manipulator gestattet andererseits, die Meßbahn schnellstmöglich für den Durchlauf der Meßlanze mit dem Sondenrohr freizumachen. Auf der anderen Seite entlastet das erfindungsgemäße Führungsgerüst bekannte Einrichtungen, die ursprünglich für die Blaslanzentechnik beim Sauerstoffaufblasverfahren (Stahlerzeugung) notwendig waren, erheblich. Das Führungsgerüst gestattet nämlich die getrennte Anordnung der gesamten Manipulationsvorrichtung für die Sondenrohre, ohne bei beengten Raumverhältnissen die Elemente der Sauerstoffaufblastechnik zu beeinflussen.

Die Auswirkung des erfindungsgemäßen Führungsgerüstes äußert sich gemäß einer Verbesserung der Erfindung darin, daß der um die horizontale Schwenkachse schwenkbare Manipulator zwischen den Schienen des Meßlanzenschlittens hindurch in die vertikale Position bewegbar ist. Dieser Gedanke beruht auf der Erkenntnis, ausgehend vom Durchmesser der Sondenrohre, die geringe Breite des Manipulators auszunutzen, der ohne Schwierigkeiten zwischen die Schienen des Meßlanzenschlittens gelegt werden kann. Es ist daher keinesfalls (wie bekannt) erforderlich, den Manipulator in erheblicher Entfernung von der Meßbahn anzuordnen.

Bei sehr großzügig dimensionierten Führungsgerüsten ist es vorteilhaft, daß für den schwenkbaren Manipulator im Führungsgerüst für den Meßlanzenschlitten eine Öffnung vorgesehen ist. Ein solches "Fenster" ist im Hinblick auf die statischen Erfordernisse des Führungsgerüstes besonders beanspruchungsfähig.

Nach der weiteren Erfindung ist der Schwenkantrieb für den kastenförmig umschlossenen Manipulator unterhalb desselben geschützt angeordnet. Diese Maßnahme unterstützt nicht nur den Schutz der hydraulischen bzw. pneumatischen Antriebselemente, sondern trägt ebenfalls zur Kompaktheit der Vorrichtung bei, die somit auf engstem Raum untergebracht werden kann.

Die für das Manipulieren der Sondenrohre erforderlichen Elemente des Manipulators können ebenfalls geschützt im Innern des Manipulators untergebracht werden, wobei weitere Vorteile zu erzielen sind. So ist vorgesehen, daß der Manipulator mit symmetrisch zur Meßachse bzw. Transportachse angeordneten, im Querschnitt winkelförmigen, schienenartigen Klemmbacken für einen mittleren Längenbereich der Sondenrohre versehen ist. Damit bleiben die Endbereiche für andere Elemente frei, und das Sondenrohr ist trotzdem sicher in der gewünschten Lage festgehalten.

Diese Vorteile ziehen weitere Vorteile nach sich, indem den Klemmbacken des Manipulators in dessen vertikaler Stellung an der Oberseite ein Führungstrichter und an der Unterseite eine beidseitig offene Führungshülse achsgleich zugeordnet sind. Einesteils wird dadurch das Befestigen der Sondenrohre an der Meßlanze begünstigt und anderenteils das Entsorgen der gebrauchten Sondenrohre.

Das Einführen der Meßlanze in den Führungstrichter kann bei lange im Betrieb befindlichen Meßlanzen, die von der Geraden abweichen, problematisch werden. Außerdem ist eine genaue achsgleiche Lage der Meßlanze zu dem aufzusteckenden Sondenrohr erforderlich. Diese Erfordernisse erfüllt im allgemeinen eine Zentriereinrichtung. Bei Anwendung einer solchen Zentriereinrichtung, die sich innerhalb der Meßbahn befinden muß, ist jedoch erforderlich, gemäß dem durchzuführenden Verfahren, die Zentriereinrichtung schnell aus der Meßbahn zu bewegen. Hierzu ist vorgesehen, daß eine in vertikaler Ebene schwenkbare Zentriereinrichtung vorgesehen ist, deren Zentrierachse in Betriebsstellung mit der Meßachse zusammenfällt.

In Ausgestaltung der Erfindung besteht die Zentriervorrichtung aus einer Schwinge, mit in zumindest zwei parallelen Ebenen vorgesehenen Zentrierelementen, und die Schwinge ist um eine horizontale Achse mittels eines angelenkten Schwenkantriebs vertikal verschwenkbar. Damit wird das kurzzeitige Wegschwenken der Zentriereinrichtung aus der Meßbahn der Meßlanze wirkungsvoll durchgeführt.

Die Grundkonzeption des vorrichtungstechnischen Teils der Erfindung wirkt sich vorteilhaft auf alle weiteren Einrichtungen aus, die für das Messen bzw. Probenehmen von Bedeutung sind. So unterliegt der Meßlanzenschlitten, der alle Zuleitungen für die Meßlanze aufweist, einer bestimmten Belastung, die versucht, den Meßlanzenschlitten in seiner vertikalen Führung zu verkanten. Verlagerungen des Meßlanzenschlittens können zu unangenehmen Störungen beim schnellen Absenken des Meßlanzenschlittens führen, zumindest jedoch zu einem unnötigen Verschleiß der Führungsorgane des Meßlanzenschlittens. Derartige ungleiche Momente werden insbesondere durch die oft sehr schweren Kühlmittelzuführungen verursacht, die einseitig auf den Meßlanzenschlitten wirken.

Die ungleichen Beanspruchungen werden aufgrund der weiteren Erfindung dadurch vermieden, daß am Meßlanzenschlitten Kühlmittelzuführungen für die Meßlanze symmetrisch zur vertikalen Ebene, in der die Meßachse und die Transportachse für die Sondenrohre verlaufen, angeordnet sind und daß die Kühlmittelzuführungen für Vor- und Rücklauf des Kühlmittels außerhalb des Führungsgerüstes verlaufen, währenddem der Manipulator innerhalb des Umrisses des Führungsgerüstes bzw. zwischen den Schienen für den Meßlanzenschlitten bewegbar ist.

Die Erfindung berücksichtigt schließlich auch noch die in den Metallerzeugungsanlagen, z. B. in Stahlwerken, als nachteilig bekannten Raumverhältnisse hinsichtlich der Anordnung und Unterbringen von Blaslanzen bzw. Reserve-Blaslanzen sowie deren An- und Abtransport. Um hierfür in jedem Fall Raum für An- und Abtransport der Reserve-Blaslanzen bzw. Reserve-Meßlanzen zu schaffen, wird vorgeschlagen, daß das Führungsgerüst für den Meßlanzenschlitten im Bereich der horizontalen Schwenkachse des Manipulators um eine horizontale Achse kippbar gelagert ist und im gegenüberliegenden, oberen Endbereich mit einem teilweise ortsfesten Kippantrieb verbunden ist. Das Kippen erfolgt selbstverständlich außerhalb des Betriebes der Meßlanze, wodurch der benötigte Freiraum für den An- und Abtransport der verbrauchten Blaslanzen bzw. überholungsbedürftigen Meßlanzen geschaffen wird.

Ausführungsbeispiele der Erfindung sind in der Zeichnung (schematisch) dargestellt und werden im folgenden näher beschrieben. Es zeigen

Fig. 1 einen senkrechten Querschnitt durch die Vorrichtung mit Sondenmagazin, Manipulator und Führungsgerüst (teilweise),

Fig. 2 die zu Fig. 1 gehörende Draufsicht,

Fig. 3 eine Vorderansicht des Sondenmagazins in Blickrichtung A gemäß Fig. 1,

Fig. 4 einen senkrechten Querschnitt durch das Führungsgerüst mit Zentriervorrichtung,

Fig. 5 die zu Fig. 4 gehörende Draufsicht,

Fig. 6 eine Vorderansicht des Meßlanzenschlittens,

Fig. 7 die zu Fig. 6 gehörende Draufsicht, wobei das Führungsgerüst im Querschnitt sichtbar ist.

Fig. 8 eine Vorderansicht der Gesamtanlage in einem Stahlwerk mit kippbarem Führungsgerüst.

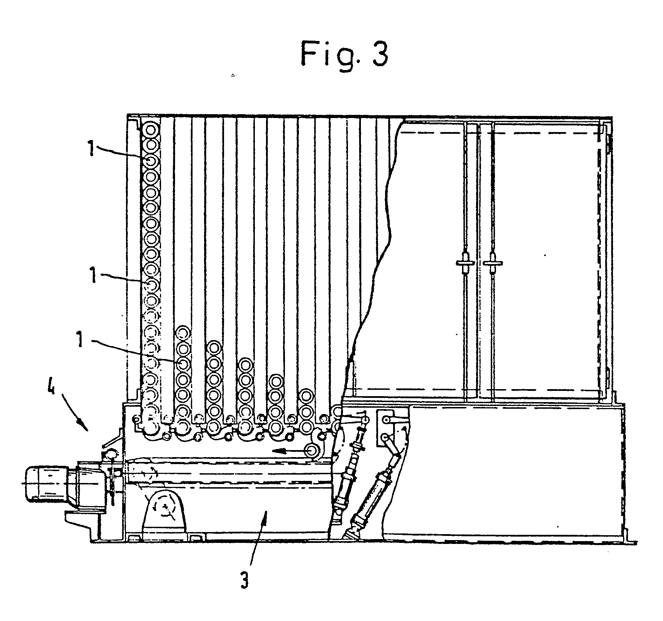

Die Meß- bzw. Probenahmesonden sind äußerlich als aus Pappe oder dgl. hergestellte Sondenrohre 1 (Fig. 3) erkennbar, die in ihrem Inneren die erforderlichen Mittel zum Messen der Temperatur, der Gaszusammensetzung und dgl. bzw. zum Probenehmen einer Probe des flüssigen Metalles aufnehmen.

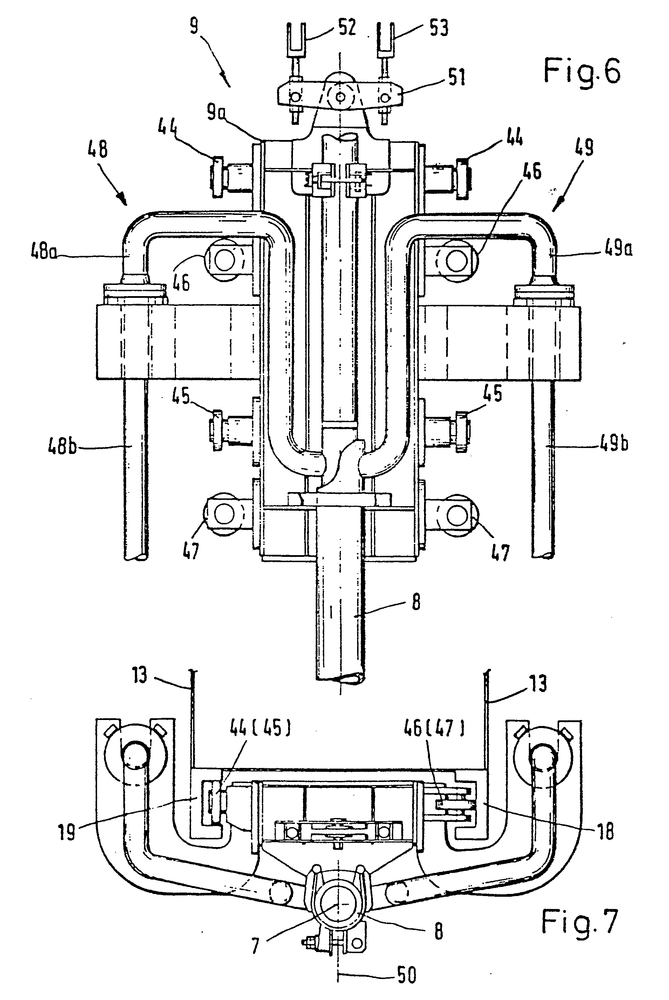

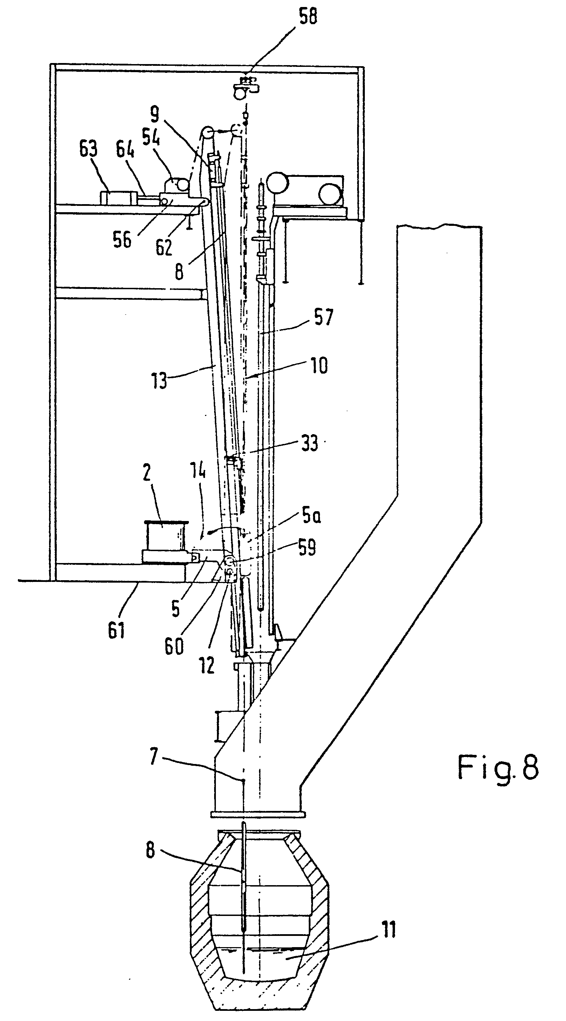

Die Sondenrohre 1 werden in horizontaler Lage aus dem Sondenmagazin 2 mittels einer Quertransporteinrichtung 3 auf einer Transportvorrichtung 4 in den Manipulator 5 befördert. Innerhalb der Transportvorrichtung 4 und innerhalb des Manipulators befindet sich ein Sondenrohr 1 konzentrisch zu der Transportachse 6. Nach Verschwenken des Manipulators 5 in die vertikale Manipulatorposition 5a befindet sich das Sondenrohr 1 genau in der vertikalen Meßachse 7, auf der im Betrieb auch die Meßlanze 8 heb- und senkbar an dem Meßlanzenschlitten 9 (Fig. 6 und 7) befestigt ist. Meßlanze 8 und Meßlanzenschlitten 9 bewegen sich auf der durch das Profil von Meßlanze 8 bzw. Meßlanzenschlitten g definierten Meßbahn 10 (Fig. 8).

Hierbei wird die Meßlanze 8 mit ihrer Spitze, die durch das Sondenrohr 1 gebildet wird, jeweils gemäß dem vorgesehenen Verfahren in das Metallbad 11 (Fig. 8) kurzzeitig eingetaucht und wieder hochgezogen. Darauf erfolgt das Entsorgen des Sondenrohres 1, von dem ein Teil abgetrennt und dem Laboratorium, falls erforderlich, zugeführt und der Restteil beseitigt wird.

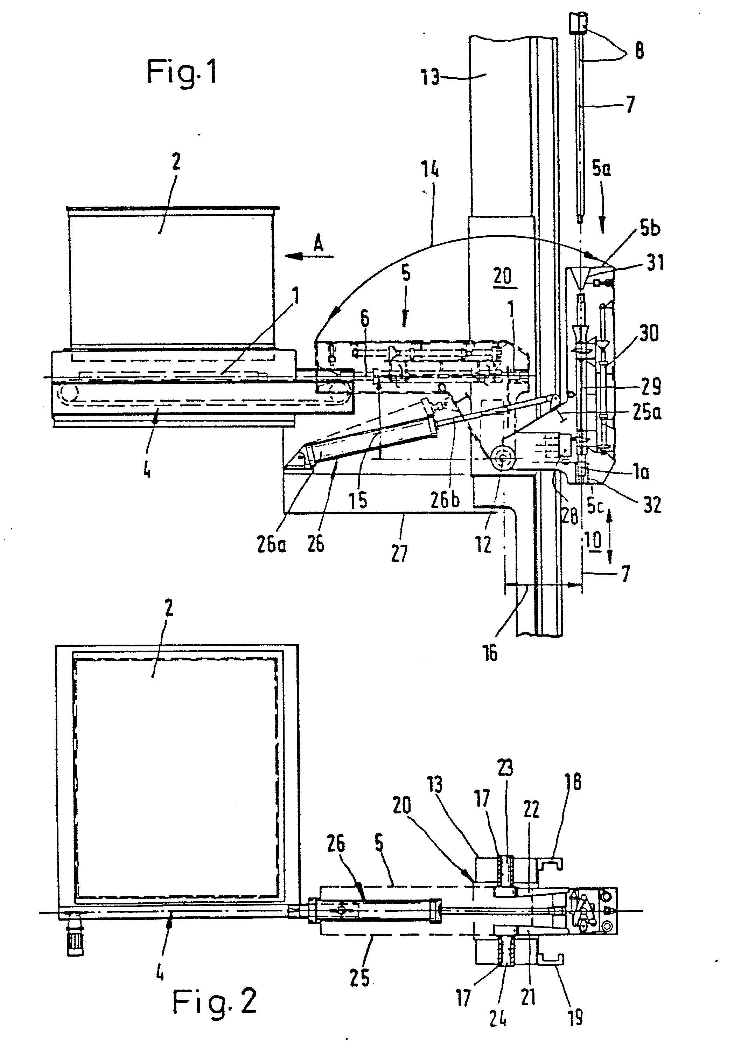

Wie aus den Fig. 1 und 8 ersichtlich ist, ist der Manipulator 5 um die senkrecht zur Zeichenebene verlaufende, horizontale Schwenkachse 12, die am Führungsgerüst 13 gelagert ist, aufgrund nur einer Schwenkbewegung auf der Kreisbahn 14 von der horizontalen Lage des Sondenrohres 1 auf der Transportachse 6 in die vertikale Lage des Sondenrohres 1 auf der Meßachse 7 bewegbar. Bedingt durch die Kreisbahn 14, die jedoch keine Voraussetzung ist, sind die Abstände 15 und 16 jeweils von der Schwenkachse 12 zu der Transportachse 6 bzw. zu der Meßachse 7 gleich groß. Aus diesem Grund sind die Schwenklager 17 im Führungsgerüst 13 unbeweglich angeordnet, d. h. starr befestigt (Fig. 2). Der Manipulator 5 bewegt sich hierbei zwischen den Schienen 18 und 19 für den Meßlanzenschlitten g durch eine Öffnung 20 im Führungsgerüst 13. Das Skelett des Manipulators 5 besteht aus den Seitenwangen 21 und 22, die an dem Schwenkzapfen 23 und 24 befestigt sind, die in den Schwenklagern 17 aufgenommen werden. Alle beschriebenen oder noch zu beschreibenden Elemente des Manipulators 5 sind in einem weitestgehend geschlossenen Kasten 25 untergebracht und somit vor Verschmutzung geschützt.

Unterhalb des Kastens 25 befindet sich der Schwenkantrieb 26, der, wie gezeichnet, aus einem hydraulisch oder pneumatisch betätigbaren Kolben-Zylinder-Antrieb besteht, dessen Zylinder 26a an einer Konsole 27 des Führungsgerüstes 13 und dessen Kolbenstange 26b an der Querstrebe 25a des Kastens 25 angelenkt sind. Innerhalb des Manipulators 5 ist außerdem die Trennvorrichtung 28, bestehend aus Motor mit Kreissäge angeordnet und ferner auf- und zubewegbare Klemmbacken 29, die mittels einer Axialverstellvorrichtung 30 zusätzlich in Richtung der Meßachse 7 hin- und herbewegbar sind. Eine Hubbewegung (Fig. 1) dient der Zuführung des Sondenrohres 1 in die Meßlanze 8 und eine Senkbewegung zur Einstellung des zu entsorgenden Sondenrohres 1, dessen Probenteil 1a mit der Trennvorrichtung 28 abgeschnitten und über eine nicht dargestellte Förderbahn dem Laboratorium zugeführt wird.

Das Ineinandergleiten der Meßlanze 8 und des Sondenrohres 1 wird durch den an der Oberseite 5b des Manipulators 5 im Innern angeordneten Führungstrichter 31 begünstigt, und als Widerlager zum Trennen des Sondenrohres 1 im Bereich der Trennvorrichtung 28 dient an der Unterseite 5c die beidseitig offene Führungshülse 32, die jeweils fluchtend auf der Meßachse 7 liegen.

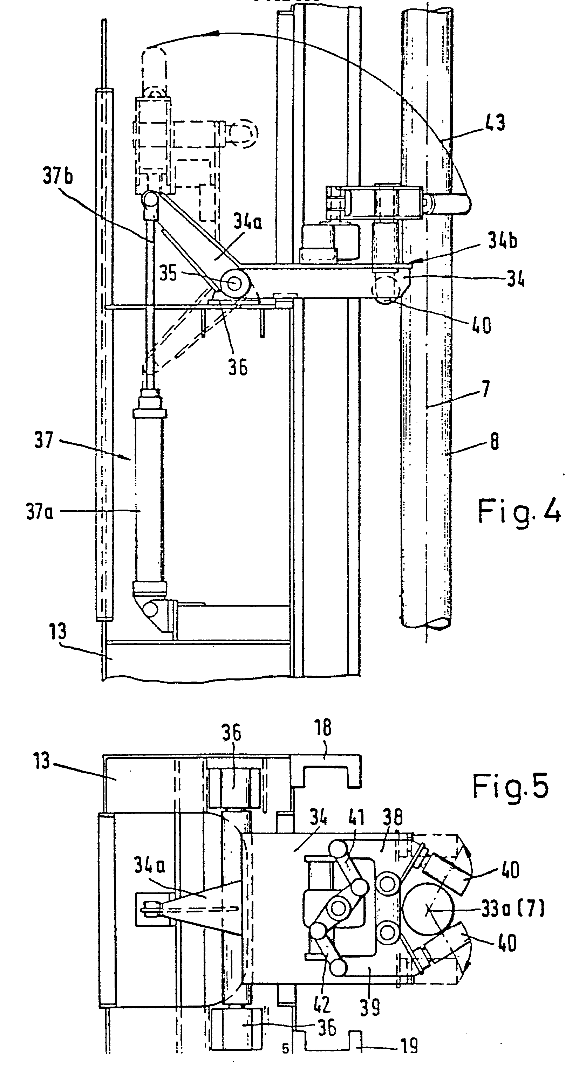

Da die Meßlanze 8 im praktischen Betrieb nicht immer gerade bleibt, ist die Zentriervorrichtung 33 vorgesehen (Fig. 4 und 5), die sich vorteilhafterweise im Endbereich der Meßlanze 8 befindet, um jede Abweichung von der Meßachse 7 gegenüber den Elementen des Manipulators 5 zu vermeiden. Die Zentrierachse 33a fällt mit der Meßachse 7 gewöhnlich zusammen.

Die Zentriervorrichtung 33 soll jedoch aus der Meßbahn 10 ausgeschwenkt werden können. Hierzu ist eine Schwinge 34 vorgesehen, die um die horizontale Achse 35 schwenkbar in Schwenklagern 36 gelagert ist. Die Schwenklager 36 sind mit dem Führungsgerüst 13 fest verbunden. Am Führungsgerüst 13 ist ferner ein Schwenkantrieb 37 vorgesehen, der im Ausführungsbeispiel aus einem hydraulisch oder pneumatisch betätigten Kolben-Zylinder-Antrieb besteht. Der Zylinder 37a ist am Führungsgerüst 13 und die Kolbenstange 37b an einem Hebelarm 34a der Schwinge 34 angelenkt. Auf der Schwingenplatte 34b lagern um vertikale Achsen schwenkbare Hebel 38 und 39, deren eines Ende die Zentrierelemente 40 tragen und deren anderes Ende mit Anstellantrieben 41 und 42 so verbunden sind, daß bei deren Betätigung zwei der Zentrierelemente 40 wie eine Zange arbeiten, wobei die Schließwege zwangsweise gleich groß sind.

Eines der Zentrierelemente 40 ist in einer tieferen Ebene angeordnet, wirkt jedoch mit den beiden anderen zusammen, so daß die Zentrierelemente 40, die hier aus Rollen bestehen, am Umfang der Meßlanze 8 um jeweils 120° versetzte Anschläge darstellen. Die Schwinge 34 ist durch Einziehen der Kolbenstange 37b in die gestrichelt gezeichnete Position verschwenkbar, wobei die Zentrierelemente 40 die Schwenkbewegung auf dem Kreisbogen 43 ausführen.

Der Meßlanzenschlitten 9 (Fig. 6 und 7) weist am Schlittenrahmen 9a befestigte Radpaare 44 und 45 auf, die innerhalb des Profils der Schienen 18 und 19 laufen. Die Radpaare 44 und 45 legen den Meßlanzenschlitten 9 damit in einer ersten Ebene fest. Zusätzliche Radpaare 46 und 47 legen den Meßlanzenschlitten 9 in einer zweiten Ebene, die auf der ersten Ebene senkrecht steht, fest. Die Meßlanze 8 befindet sich mittig am Meßlanzenschlitten 9 und befindet sich in der Meßachse 7. Dieser Zustand darf durch das Gewicht der Kühlmittelzuführungen 48 und 49 nicht beeinträchtigt werden. Die Kühlmittelzuführungen 48 und 49, die nicht flexible Abschnitte 48a, 49a und flexible Abschnitte 48b und 49b aufweisen, liegen daher streng symmetrisch zur vertikalen Ebene 50.

Die flexiblen Abschnitte 48b, 49b verlaufen außerdem außerhalb des Umrisses des Führungsgerüstes 13 und begünstigen die Grundkonzeption, den Manipulator 5 auf dem kürzesten Weg unmittelbar in die Meßachse 7 einzufahren.

Der Meßlanzenschlitten 9 hängt mittels des Waagebalkens 51 und den Zuggliedern 52 und 53 an dem Seiltrieb 54, der selbst auf einem Wagen 56 angeordnet ist.

Der in einem Stahlwerk zur Verfügung stehende Raum (Fig. 8) ist durch die für die Stahlerzeugung im Aufblasverfahren erforderliche Sauerstofflanze 57 sehr beschränkt. Obwohl die Meßlanze 8 parallel mit der Sauerstofflanze 57 betrieben werden kann, ist in einer großen Anzahl von Fällen ein Raum für An- und Abtransport einer Reserveblaslanze bzw. einer Reservemeßlanze nicht vorhanden. Da außerdem oft nur eine gemeinsame Kranbahn 58 vorgesehen ist, liegt diese über einem schmalen Schacht. Der Transport der Reservelanzen erfolgt in diesem Schacht quer zur Zeichenebene der Fig. 8.

Das Führungsgerüst 13 für die Meßlanze 8 ist daher in der Nähe der Schwenkachse 12 für den Manipulator 5 selbst kippbar um die horizontale Achse 59 gelagert, um damit den notwendigen Raum beim Austausch einer Lanze zu schaffen. Die Kipplager 60 befinden sich auf einer ortsfesten Konsole 61. Das Führungsgerüst 13 ist mit dem Wagen 56 mittels des Zapfengelenkes 62 verbunden und der Wagen 56 mit einem ortsfesten Schubantrieb 63 über die Schubstange 64. Der Schubantrieb 63 und der Wagen 56 bilden zusammen mit der Schubstange 64 den Kippantrieb.

## Patentansprüche

1. Verfahren zum Handhaben von Meß- bzw. Probenahme-Sondenrohren beim Metall-, insbesondere beim Stahlerzeugen, bei dem das Sondenrohr horizontal aus einem Sondenmagazin entnommen, vertikal an einer Meßlanze befestigt, in das Metallbad abgesenkt, anschließend angehoben und entsorgt wird, dadurch gekennzeichnet, daß das im Manipulator (5) wie an sich bekannt horizontal liegende Sondenrohr aufgrund nur einer Schwenkbewegung in vertikaler Ebene unmittelbar in die vertikale Meßachse (7) bewegt, dort mit der Meßlanze (8) verbunden, danach aus dem Manipulator (5) hochgehoben und auf der zwischenzeitlich freigemachten Meßbahn (10) in das Metallbad (11) abgesenkt, nach dem Messen bzw. Probenehmen gehoben und in der Meßachse (7) entsorgt wird, wobei zum Freimachen der Meßbahn (10) der Manipulator (5) und eine für die Meßlanze (8) vorgesehene Zentriervorrichtung (33) jeweils gleichzeitig aus der Meßbahn (10) weggeschwenkt werden.

2. Vorrichtung zur Durchführung des Verfahrens nach Anspruch 1, mit einem um eine horizontale Schwenkachse (12) schwenkbaren Manipulator (5) und einem Sondenmagazin (2), dadurch gekennzeichnet, daß der Manipulator (5) unmittelbar an dem in Betriebsstellung vertikalen Führungsgerüst (13) für den Meßlanzenschlitten (9) gelagert ist und daß die Abstände (15,16) von der Meßachse (7) zur horizontalen Schwenkachse (12) bzw. von der horizontalen Schwenkachse (12) des Manipulators (5) zur horizontalen Transportachse (6) für die Sondenrohre (1) gleich groß sind.

3. Vorrichtung nach Anspruch 2, dadurch gekennzeichnet, daß der um die horizontale Schwenkachse (12) schwenkbare Manipulator (5) zwischen den Schienen (18,19) des Meßlanzenschlittens (9) hindurch in die vertikale Position (5a) bewegbar ist.

4. Vorrichtung nach den Ansprüchen 2 und 3, dadurch gekennzeichnet, daß für den schwenkbaren Manipulator (5) im Führungsgerüst (13) für den Meßlanzenschlitten (9) eine öffnung (20) vorgesehen ist.

5. Vorrichtung nach den Ansprüchen 2 bis 4, dadurch gekennzeichnet, daß der Schwenkantrieb (26) für den kastenförmig umschlossenen Manipulator (5) unterhalb desselben geschützt angeordnet ist.

6. Vorrichtung nach den Ansprüchen 2 bis 5, dadurch gekennzeichnet, daß der Manipulator (5) mit symmetrisch zur Meßachse (7) bzw. Transportachse (6) angeordneten, im Querschnitt winkelförmigen, schienenartigen Klemmbacken (29) für einen mittleren Längenbereich der Sondenrohre (1) versehen ist.

7. Vorrichtung nach den Ansprüchen 2 bis 6, dadurch gekennzeichnet, daß den Klemmbacken (29) des Manipulators (5) in dessen vertikaler Stellung an der Oberseite (5b) ein Führungstrichter (31) und an der Unterseite (5c) eine beidseitig offene Führungshülse (32) achsgleich zugeordnet sind.

8. Vorrichtung nach den Ansprüchen 2 bis 7, dadurch gekennzeichnet, daß eine in vertikaler Ebene schwenkbare Zentriereinrichtung (33) vorgesehen ist, deren Zentrierachse (33a) in Betriebsstellung mit der Meßachse (7) zusammenfällt.

9. Vorrichtung nach Anspruch 8, dadurch gekennzeichnet, daß die Zentriervorrichtung (33) aus einer Schwinge (34) besteht, mit in zumindest zwei parallelen Ebenen vorgesehenen Zentrierelementen (40) und daß die Schwinge (34) um eine horizontale Achse (35) mittels eines angelenkten Schwenkantriebs (37) vertikal verschwenkbar ist.

10. Vorrichtung nach einem oder mehreren der Ansprüche 2 bis 9, dadurch gekennzeichnet, daß am Meßlanzenschlitten (9) Kühlmittelzuführungen (48,49) für die Meßlanze (8) symmetrisch zur vertikalen Ebene (50), in der die Meßachse (7) und die Transportachse (6) für die Sondenrohre (1) verlaufen, angeordnet sind und daß die Kühlmittelzuführungen (48, 49) für Vor- und Rücklauf des Kühlmittels außerhalb des Führungsgerüstes (13) verlaufen, währenddem der Manipulator (5) innerhalb des Umrisses des Führungsgerüstes (13) bzw. zwischen den Schienen (18,19) für den Meßlanzenschlitten (9) bewegbar ist.

11. Vorrichtung nach einem oder mehreren der Ansprüche 2 bis 10, dadurch gekennzeichnet, daß das Führungsgerüst (13) für den Meßlanzenschlitten (9) im Bereich der horizontalen Schwenkachse (12) des Manipulators (5) um eine horizontale Achse (59) kippbar gelagert ist und im gegenüberliegenden, oberen Endbereich mit einem teilweise ortsfesten Kippantrieb (56, 63, 64) verbunden ist.

## Claims

1. Process for manipulating measuring and sampling probe tubes during metal production, particularly steel production, in which the sampling tube is horizontally taken from a storage facility, vertically attached to a measuring lance, lowered into the metal bath and then lifted and severed, characterised by the fact that the sampling tube (1) horizontally lying in the manipulator (5) as known is directly moved into the vertical measuring axis (7) in a vertical plane in a single pivoting motion, where it is fitted to the measuring lance (8), lifted off the manipulator (5) and lowered into the metal bath (11) via the measuring track (10) (which has been cleared in the meantime), raised after measuring or sampling and severed in the measuring axis (7) whereby the measuring track (10) is cleared by swinging the manipulator (5) and a centering device (33) for the measuring lance (8) simultaneously out of the measuring track (10).

2. Apparatus to implement the process as in Claim 1, with a manipulator (5) pivotable about a horizontal axis (12) and a sampling tube storage facility (2),
characterised by the fact that
the manipulator (5) is supported directly at the guide frame (13) (vertical when in operating position) for the measuring lance carriage (9), and that the distances-(15, 16) between the measuring axis (7) and the horizontal pivot axis (12) and between the horizontal pivot axis (12) of the manipulator (5) and the horizontal transport axis (6) for the sampling tubes (1) are equal in length.

3. Apparatus as in Claim 2,
characterised by the fact that
the manipulator (5) pivoting about the horizontal axis (12) can be moved into the vertical position (5a) between the rails (18), (19) of the measuring lance carriage (9).

4. Apparatus as in Claims 2 and 3,
characterised by the fact that
an opening (20) for the pivoting manipulator (5) is provided in the guide frame (13) for the measuring lance carriage (9).

5. Apparatus as in Claims 2 to 4,
characterised by he fact that
the pivot drive (26) for the box-like enclosed manipulator (5) is arranged below the latter.

6. Apparatus as in Claims 2 to 5,
characterised by the fact that
the manipulator (5) is equipped with rail-like brackets (29) of angular cross-section designed for mediumlength sampling tubes (1) and arranged symmetrically to the measuring axis (7) and the transport axis (6).

7. Apparatus as in Claims 2 to 6,
characterised by the fact that
the brackets (29) of the manipulator (5), with the latter in vertical position, have a guide funnel (31) at the top (5b) and an open-ended sleeve (32) at thebottom (5c) arranged in the same axis.

8. Apparatus as in Claims 2 to 7,
characterised by the fact that
a centering device (33) pivoting in a vertical plane is provided, its centering axis (33a) coinciding with the measuring axis (7) when it is in its operating position.

9. Apparatus is in Claim 8,
characterised by the fact that
the centering device (33) consists of a rocking arm (34) with centering elements (40) being provided in at least two parallel planes, and the rocking arm (34) turns about a horizontal axis (35) in the vertical plane by means of a hinged pivot drive (37).

10. Apparatus as stated in one or more of the Claims 2 to 9,
characterised by the fact that
coolant ducts (48), (49) for the measuring lance (8) are arranged symmetrical to the vertical plane (50) on the measuring lance carriage (9) in which the measuring axis (7) and the transport axis (6) for the sampling tubes (1) are located, and the ducts (48), (49) for coolant feed and return are located outside the guide frame (13), whereas the manipulator (5) can be moved within the outlines of the guide, i.e. between the rails (18, 19) for the measuring lance carriage (9).

11. Apparatus as in one or more of the claims 2 to 10,
characterised by the fact that
the guide frame (13) forthe measuring lance guide carriage (9) is so mounted, on the one hand, that it can pivot around its horizontal axis (59) in the area of the horizontal pivot axis (12) of the manipulator (5), and on the other hand, is connected to a partly stationary push tilt drive (56, 63, (64) in the opposite upper end zone.

**Revendications**

1. Procédé de manutention de sondes de mesure/prélévement d'échantillons, pour la production de métaux (acier surtout) - la sonde étant extraite horizontalement du magasin à sondes, fixée en position verticale sur la sous-lance, plongée dans le bain puis remontée et évacuée,
caractérisé par le fait que la sonde (1) logée dans le manipulateur (5) comme on sait et pivotable uniquement dans un plan vertical est amenée dans l'axe de mesure (7) où elle est alors montée sur la sous-lance (3) puis extraite du manipulateur (5) par le haut et plongée dans le bain métallique (11) - le couloir de mesure (10) ayant été libéré entretemps - ensuite remontée (toujours suivant l'axe (7)) et finalement évacuée après la mesure / le prélévement d'échantillons, le couloir de mesure (10) étant libéré par pivotement simultané du manipulateur (5) et du dispositif de centrage (33) de la lance de mesure (3).

2. Dispositif pour l'éxécution du procédé selon revendication 1, composé d'un manipulateur (5) pivotable autour d'un axe horizontal (12) et d'un magasin à sondes (2),
caractérisé par le fait que le manipulateur (5) est directement logé sur le support de guidage (13), en position de travail verticale, du chariot porte-lance de mesure (9) et que les écarts (15, 16), d'une part entre l'axe de mesure (7) et l'axe horizontal de pivotement (12) du manipulateur (5) et d'autre part entre ce même axe (12) et l'axe horizontal de transport (6) de la sonde (1) sont identiques.

3. Dispositif selon revendication 2, caractérisé par le fait que le manipulateur (5) est pivotable, autour de l'axe horizontal (12) et ce, jusqu'en position verticale (5a) en passant entre les rails (18,19) du chariot porte-lance (9).

4. Dispositif selon revendications 2 et 3, caractérisé par le fait qu'une ouverture (20) pour le manipulateur pivotable (5) est prévue dans le support de guidage (13) du chariot porte-lance (9).

5. Dispositif selon revendications 2 à 4, caractérisé par le fait que le mécanisme de pivotement (26) du manipulateur (S), logé dans un caisson, est fixé en un endroit protégé, en dessous de celui-ci.

6. Dispositif selon revendications 2 à 5, caractérisé par le fait que le manipulateur (5) est pourvu de mâchoires (29) de section angulaire (type rail) symétriques par rapport à l'axe de mesure (7) / axe de transport (6) et conçues pour une sonde de longueur moyenne (1).

7. Dispositif selon revendications 2 à 6, caractérisé par le fait qu'aux mâchoires (2) du manipulateur (5) en position verticale sont adjoints un cone de guidage (31) dans la partie supérieure (5b) d'une part et une douille de guidage (32), ouverte des deux côtés, dans la partie inférieure (5c) et ce, sur le même axe.

8. Dispositif selon revendications 2 à 7, caractérisé par le fait qu'il est prévu un dispositif de centrage (33) pivotable dans un plan vertical et dont l'axe (33a), en position de travail, coincide avec l'axe de mesure (7).

9. Dispositif selon revendication 8, caractérisé par le fait que le dispositif de centrage (33) comprend un bras (34) pivotable verticalement autour d'un axe horizontal (35) au moyen d'un entraînenent (37) articulé, et des éléments de centrage (40) prévus au moins dans deux plans parallèles.

10. Procédé selon une ou plusieurs des revendications 2 à 9, caractérisé par le fait que le chariot (9) est équipé d'amenées (43, 49) du réfrigérant pour la lance de mesure symétriques par rapport à un plan vertical contenant l'axe de mesure (7) et l'axe de transport de la sonde (1) et que les amenées (48, 49) aller et retour du réfrigérant sont situées hors du support de guidage (13) tandis que le manipulateur (5) est mobile à l'intérieur du périmétre du support de guidage (13) / entre les rails (13, 19) du chariot (9).

11. Dispositif selon une ou plusieurs des revendications 2 à 10, caractérisé par le fait que le support de guidage (13) du chariot porte-lance (9) est logé dans la zone de l'axe horizontal (12) du manipulateur (5) d'une part - de sorte à autoriser son pivotement autour d'un axe horizontal (59) - et est relié d'autre part au mécanisme de pivotement (56, 63, 64) - en partie fixe - dans la partie supérieure opposée.

Fig. 1

Fig. 2

# Fig. 3

Fig.4

Fig.5

Fig.6

Fig.7

Fig. 8